# FASCICULE DE BREVET EUROPEEN

(11) **EP 3 238 803 B1**
(45) Date de publication et mention de la délivrance du brevet: **19.08.2020**
(21) Numéro de dépôt: 17168185.1
(22) Date de dépôt: 26.04.2017
(51) Int. Cl.: E03F 5/14, B01D 21/00, B01D 21/24

(54) **DISPOSITIF SÉPARATEUR-DÉCANTEUR POUR LE TRAITEMENT DES EAUX PLUVIALES ET/OU DE RUISSELLEMENT**
SEPARATOR-DECANTER-VORRICHTUNG ZUR BEHANDLUNG VON REGENWASSER UND / ODER ABFLUSSWASSER
SEPARATOR-DECANTER DEVICE FOR THE TREATMENT OF RAINWATER AND / OR RUNOFF

(30) Priorité: 26.04.2016 FR 1653667
(43) Date de publication de la demande: 01.11.2017
(73) Titulaire: Saint Dizier Environnement (SDENV), 92100 Boulogne Billancourt (FR)
(72) Inventeur: VIAU, Jean-Yves, 59830 CYSOING (FR); NICOLAS, Michel, 30128 GARONS (FR)
(74) Mandataire: Cabinet Bleger-Rhein-Poupon

(56) Documents cités:
- FR-A1- 2 711 130
- US-A- 3 963 624
- US-A- 5 534 141
- US-A1- 2006 065 594
- US-A1- 2006 175 251
- US-A1- 2007 023 352

## Description

La présente invention concerne le domaine des ouvrages, ou dispositifs, de décantation lamellaire.

La présente invention trouvera son application principalement dans le domaine du traitement de liquides chargés, notamment des eaux pluviales chargées de particules solides, et plus particulièrement dans la séparation entre l'eau et les boues constituées de ces particules solides.

Dans le domaine du traitement et de l'épuration des liquides chargés, notamment des eaux de pluies et/ou de ruissellement, on utilise généralement des décanteurs de grande taille, capables de gérer des volumes importants d'eaux à traiter, et dont la fonction principale est de retenir une proportion élevée de particules solides contenues dans les liquides, voire la totalité, afin de dépolluer ceux-ci au moins en partie.

Ainsi, à cet effet, le traitement des liquides chargés peut être effectué dans des ouvrages comprenant au moins un compartiment dans lequel s'effectue une décantation lamellaire.

On connait ainsi, notamment, par le brevet français FR 2 711 130, un tel ouvrage de décantation lamellaire comprenant une cuve avec une pluralité de compartiments dont l'un, dit de « séparation et de décantation », qui contient au moins une cellule lamellaire.

La cellule lamellaire est constituée soit de plaques, soit d'alvéoles (circulaires, rectangulaires, ou de géométrie diverse) ou encore de nids d'abeilles (modules hexagonaux).

Cette cellule lamellaire permet de créer, et d'entretenir, un flux laminaire permettant d'assurer la séparation et la décantation des particules solides contenues dans le liquide traité.

Ces particules tombent ensuite dans une alvéole de rétention des sédiments, positionnée sous la cellule lamellaire, où elles vont s'agglomérer pour former des boues.

L'ouvrage de décantation lamellaire décrit dans le brevet FR 2 711 130 présente de nombreux avantages. Notamment, cet ouvrage permet une décantation poussée des sédiments par un stockage prolongé de ceux-ci dans un compartiment dédié, présent au sein de la cuve.

On connait également, du document de brevet US 2006/0175251, un système décanteur en tubes, ces derniers étant arrangés en faisceaux, pour le traitement des eaux et l'élimination des impuretés.

Le système décrit ici incorpore un floculateur et un compartiment de décantation en tube, les effluents passant du premier au second par l'intermédiaire d'orifices d'entrée amenant le liquide vers une pluralité de canaux d'effluents. Les boues sont aspirées au travers d'un système de collection de boues situé sous le système décanteur en tubes.

Au niveau de leur section inférieure, lesdits canaux d'effluents présentent des orifices pour diriger l'effluent sous les tubes décanteurs, et tout le long de ces groupes de tubes, ces canaux étant refermés à l'exception desdits orifices, par exemple au moyen de pièces rapportées au niveau de cette section inférieure. De manière alternative, la section inférieure peut être d'un seul tenant avec les murs latéraux des canaux d'effluents.

Toutefois, il reste des améliorations à apporter aux dispositifs de traitement des liquides chargés, notamment des eaux pluviales, et plus particulièrement en ce qui concerne le suivi et la fiabilité de la mesure du niveau de voile de boues sous la cellule de décantation.

Le but à atteindre ici est une augmentation de l'efficacité, d'une part, des opérations de vidange et d'extraction des boues et, d'autre part, du nettoyage de l'alvéole, ou de la chambre, positionnée sous la cellule de décantation et de séparation.

En effet, dans la plupart des dispositifs de traitement des eaux existants, la mesure du niveau de boues directement sous la cellule de décantation, lamellaire ou autre, est extrêmement difficile, voire même impossible. C'est le cas par exemple du dispositif décrit dans le document US 2006/0175251 susmentionné, dans lequel l'accès sous le décanteur en tubes est impossible, même au travers des canaux d'effluents, ces derniers étant systématiquement refermés au niveau de leur section inférieure.

Par conséquent, dans certains dispositifs de l'état de la technique, la mesure du niveau de voile de boues est généralement effectuée dans un autre compartiment, ou chambre, du dispositif de traitement, qui est situé par exemple en amont du compartiment qui comporte la cellule de décantation.

Or, une telle mesure, prise en amont, dans un compartiment différent du compartiment de décantation duquel doivent être extraites les boues, n'est pas représentative du stockage réel des boues dans ledit compartiment de décantation.

Il en résulte des difficultés dans la prévision des opérations de vidange des boues issues de la séparation des particules via les cellules de décantation.

En effet, sans une mesure fiable du niveau de boues sous les cellules du compartiment de séparation décantation, il est quasiment impossible de déterminer avec précision le moment opportun pour en extraire lesdites boues.

En outre, dans de nombreux dispositifs traditionnels de traitement des liquides chargés, les opérations de vidange et d'extraction des boues elles-mêmes sont compliquées.

Différents systèmes existent, dans l'état de la technique, pour permettre d'extraire les boues qui résultent de la décantation des particules.

On connait ainsi des décanteurs lamellaires dans lesquels la vidange, consistant entre autre à extraire les boues de l'ouvrage, est effectuée par un pompage desdites boues qui sont déposées sous les plaques de décantation. Ce pompage peut être effectué à partir du compartiment, ou de la chambre, qui est localisé en amont du compartiment comportant la cellule lamellaire, et ce par l'intermédiaire d'une tuyauterie coudée d'aspiration reliée, par exemple, à une machine hydrocureuse lors des opérations de vidange et de curage.

Toutefois, cette aspiration, via une tuyauterie coudée d'hydrocureuse, et déportée par rapport au compartiment de décantation, est particulièrement difficile. Il est notamment compliqué, voire impossible, d'extraire de manière efficace la totalité des boues qui se sont déposées sous la plaque de décantation.

Une autre possibilité pour effectuer le pompage des boues consiste à utiliser des colonnes déportées d'aspirations de boues avec raccord rapide, également appelé « raccord pompier ». Ces colonnes permettent de pomper lesdites boues en un point situé sous la cellule lamellaire.

Cependant, ces colonnes de vidange déportées sont, en pratique, peu utilisées par les exploitants, du fait de nombreux retours d'expérience négatifs sur la capacité desdites colonnes à extraire le volume total des boues accumulées et présentes sous la cellule de décantation, ainsi que par la difficulté à se connecter sur ces colonnes.

L'invention offre la possibilité de pallier les divers inconvénients et problèmes de l'état de la technique en proposant un dispositif de traitement des liquides chargés qui permet un accès aisé au compartiment localisé sous au moins une cellule de séparation et de décantation, cette dernière ayant pour fonction de permettre une séparation des particules contenues dans le liquide et une décantation de ces dernières.

A cet effet, la présente invention concerne un dispositif séparateur-décanteur de traitement des eaux pluviales et/ou de ruissellement chargées de particules de boues à éliminer desdites eaux, ledit dispositif comprenant une cuve à laquelle est reliée au moins une canalisation d'alimentation par laquelle arrivent lesdites eaux chargées et au moins une canalisation d'évacuation par laquelle est évacuée une eau débarrassée d'au moins une partie desdites particules, ladite cuve comprenant au moins un compartiment de séparation et de décantation, lequel renferme au moins une cellule lamellaire de décantation configurée pour permettre le passage desdites particules de boues au travers de ladite au moins une cellule lamellaire de décantation, vers une zone de stockage desdites boues, ladite zone de stockage étant située sous ladite au moins une cellule lamellaire de décantation, ledit dispositif étant caractérisé par le fait qu'il comporte au moins un moyen d'accès à ladite zone de stockage depuis l'extérieur dudit dispositif, ledit moyen d'accès traversant, de part en part, ladite au moins une cellule lamellaire de décantation, pour une mesure du voile de boues dans ladite zone de stockage et une élimination efficace desdites boues.

De cette manière, il est envisageable d'avoir un accès direct sous la cellule lamellaire de décantation. Ainsi, une mesure du voile de boues peut être effectuée dans le compartiment adéquat, là où les particules se déposent pour former les boues. Il est également plus aisé d'éliminer efficacement le lit de boues lors des opérations de vidange et de curage avec l'hydrocureuse.

De manière particulièrement avantageuse, ledit au moins un moyen d'accès présente une ouverture traversante à l'intérieur de laquelle est inscrit un cercle ayant un diamètre d compris entre 100 et 300 millimètres, de préférence compris entre 150 et 250 millimètres, de préférence compris entre 180 et 220 millimètres, ledit diamètre d étant plus préférentiellement encore égal à 200 millimètres.

Plus avantageusement encore, ledit au moins un moyen d'accès présente une section ronde de diamètre d compris entre 100 et 300 millimètres, de préférence compris entre 150 et 250 millimètres, de préférence compris entre 180 et 220 millimètres, ledit diamètre d étant plus préférentiellement encore égal à 200 millimètres.

Grâce à ces caractéristiques, on peut permettre le passage à la fois, au travers dudit moyen d'accès, d'un capteur de mesure du voile de boues et d'une conduite de soutirage des boues qui est reliée, par exemple, à une machine hydrocureuse, tout en limitant, de manière particulièrement avantageuse, l'impact de la présence du ou des moyens d'accès sur la surface utile de décantation lamellaire.

Cela est particulièrement intéressant lorsque ledit capteur de boues est installé en permanence pour une mesure en continu du voile de boues.

Préférentiellement, ledit au moins un moyen d'accès s'étend selon une orientation sensiblement verticale.

Cette orientation verticale facilite un déplacement aisé du capteur de mesure des boues et/ou de la conduite de soutirage desdites boues.

De manière intéressante, ledit au moins un moyen d'accès comporte un conduit s'étendant au moins en partie au travers de ladite au moins une cellule lamellaire de décantation.

Ce conduit peut également s'étendre, de préférence, au moins en partie au-dessus de la surface de ladite au moins une cellule lamellaire de décantation.

Ainsi, on évite que les eaux à traiter, par exemple les eaux de pluie, ne traversent le conduit sans passer par la cellule lamellaire de décantation. Or, cette dernière, en entretenant un flux laminaire, provoque la séparation des hydrocarbures éventuels qui floculent et se regroupent à la surface et des particules qui se déposent dans le fond de la cuve, sous la cellule lamellaire de décantation, dans la zone de stockage des boues.

Dans un mode de réalisation particulier, ledit au moins un moyen d'accès comporte un moyen d'obturation amovible dudit conduit.

Cette caractéristique permet également d'empêcher un passage direct des eaux pluviales et/ou de ruissellement à traiter au travers du moyen d'accès, sans traitement par la cellule lamellaire de décantation.

En ce qui concerne ladite au moins une cellule lamellaire de décantation, celle-ci peut consister, par exemple, en une cellule lamellaire à plaques ou bien, dans un exemple de réalisation différent, en une cellule lamellaire à nids d'abeilles, ou un ensemble de blocs à nids d'abeilles.

Ces cellules lamellaires de décantation à plaques ou à nids d'abeilles présentent respectivement des lamelles juxtaposées, orientées parallèlement les unes aux autres et inclinées par rapport au plan horizontal, soit des alvéoles en forme de modules hexagonaux. Elles permettent, par l'entretien d'un flux laminaire, la séparation des particules présentes dans les eaux à traiter et leur dépôt sous lesdites cellules.

D'autres caractéristiques et avantages de l'invention ressortiront de la description détaillée qui va suivre des modes de réalisation non limitatifs de l'invention, en référence aux figures annexées dans lesquelles :
- la figure 1 représente une vue schématique en coupe, de côté, d'un mode de réalisation particulier d'un dispositif séparateur-décanteur selon l'invention ;
- la figure 2 représente un agrandissement d'une partie de la figure 1 et permet d'illustrer un mode de réalisation particulier d'un moyen d'accès à la zone de stockage des boues, cette dernière étant localisée sous la cellule de décantation, en l'occurrence une cellule lamellaire à plaques.

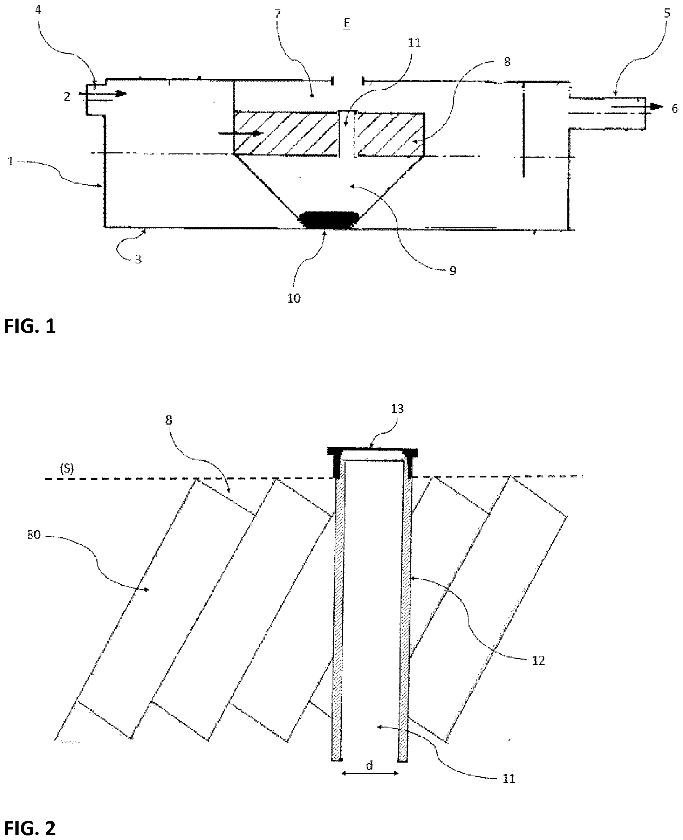

Tel que représentée sur la figure 1, la présente invention concerne un dispositif séparateur-décanteur 1 pour le traitement d'un liquide chargé de particules solides en suspension, ces dernières devant être éliminées du liquide en question.

Le liquide à traiter consiste de préférence, en des eaux de pluie et/ou en des eaux de ruissellement 2, ou également en des effluents industriels ou domestiques, comprenant des particules solides de boues à éliminer.

Le dispositif séparateur-décanteur 1 de l'invention comporte, au moins, une cuve 3 qui est reliée, d'une part, à au moins une canalisation d'alimentation 4 et, d'autre part, à au moins une canalisation d'évacuation 5.

Ainsi, les eaux 2 pluviales et/ou de ruissellement à traiter, chargées de particules de boues, arrivent au niveau du dispositif séparateur-décanteur 1 par l'intermédiaire de la canalisation d'alimentation 4.

Les eaux à traiter 2 subissent alors, au sein de la cuve 3, un traitement destiné à éliminer, au moins en partie, les particules de boues présentes dans lesdites eaux 2, en sorte que soit évacué, via la canalisation 5, une eau 6 débarrassée d'une grande partie de particules, voire de la totalité des particules de boues.

A cet effet, la cuve 3 du dispositif 1 de l'invention comporte au moins un compartiment 7 qui a pour fonction de permettre une séparation et une décantation des particules de boues contenues dans lesdites eaux pluviales et/ou de ruissellement 2 à traiter.

Le compartiment 7 est, par conséquent, dénommé compartiment de séparation et de décantation 7 et comprend au moins une cellule lamellaire de décantation 8.

Le nombre de cellules lamellaires de décantation dépend notamment de la taille du dispositif 1.

En effet, ledit dispositif 1 de l'invention présente une taille relativement imposante, étant donné qu'il doit être apte à permettre le traitement de volumes importants d'eaux pluviales et/ou de ruissellement, typiquement plusieurs dizaines, voire plusieurs centaines de mètres cubes d'eaux par heure.

Ainsi, à cet effet, le dispositif 1 de l'invention peut présenter, par exemple, un diamètre compris entre 1,5 et 3 mètres et une longueur comprise entre 3 et 11 mètres.

Par conséquent, en fonction des dimensions du dispositif 1, on peut trouver, dans le compartiment 7 de séparation et de décantation, une ou plusieurs cellule(s) lamellaire(s) de décantation 8.

Dans un premier mode de réalisation, qui est celui illustré sur les figures annexées, ladite au moins une cellule de décantation 8 consiste en une cellule lamellaire à plaques 80. Cette dernière est constituée d'une pluralité de lamelles, ou plaques, juxtaposées, orientées parallèlement les unes aux autres, et inclinées par rapport au plan horizontal, généralement d'un angle compris entre 45 et 60°.

Dans un second mode de réalisation tout aussi avantageux, mais non représenté sur les figures, ladite au moins une cellule lamellaire de décantation 8 consiste en une cellule à nids d'abeilles, par exemple en matériau polypropylène. Celle-ci peut par ailleurs être constituée de blocs assemblés entre eux.

Le dispositif 1 séparateur-décanteur selon l'invention peut également comporter une combinaison d'une ou plusieurs cellule(s) à nids d'abeilles et d'une ou plusieurs cellule(s) lamellaire de décantation à plaques 80.

Ladite au moins une cellule lamellaire de décantation 8 a pour fonction de créer et d'entretenir un écoulement laminaire qui assure la séparation et la décantation des particules de boues, celles-ci passant au travers de ladite au moins une cellule lamellaire de décantation 8, vers une zone de stockage 9 des boues 10.

Ladite zone de stockage 9 des boues est donc située sous ladite cellule lamellaire de décantation 8, et les particules issues de la décantation vont venir se déposer dans le fond de la cuve 3 sous forme de boues 10 et remplir progressivement ladite zone de stockage 9.

Dans un exemple de réalisation non limitatif, qui est celui représenté sur la figure 1 jointe, la zone de stockage 9 des boues 10 comporte une trémie convergente permettant une collecte desdites boues 10.

De manière particulièrement avantageuse, le dispositif 1 séparateur-décanteur selon l'invention comporte au moins un moyen d'accès 11 à la zone de stockage 9 des boues 10, ledit moyen d'accès 11 traversant, de part en part, ladite au moins une cellule lamellaire de décantation 8 et permettant d'avoir un accès à la zone de stockage des boues directement depuis l'extérieur E du dispositif 1.

Cela permet d'avoir un accès direct sous la cellule lamellaire de décantation 8 afin de pouvoir mesurer précisément le niveau de voile de boues, par exemple au moyen d'un capteur ou d'une sonde portable de détection du voile de boues.

La présence d'un moyen d'accès 11 à la zone de stockage 9 autorise également le passage, notamment, d'un tuyau d'aspiration des boues relié à une hydrocureuse, ce qui facilite une élimination complète du lit de boues 10, au moment opportun, déterminé par la mesure du voile de boues, évitant ainsi un réentrainement desdites boues 10.

Selon la taille du dispositif 1, et notamment selon la taille du compartiment de séparation et de décantation 7, un ou plusieurs moyens d'accès 11 peuvent traverser ladite au moins une cellule de décantation 8.

En d'autres termes, par exemple, le dispositif 1 peut comporter une cellule lamellaire de décantation 8 qui est traversée par un moyen d'accès 11 à la zone 9, pour les dispositifs 1 de petite taille, ou une cellule 8 traversée par une pluralité de moyens d'accès 11.

Dans ce cas de figure particulier, lorsque le dispositif 1 comporte plusieurs moyens d'accès 11, deux moyens 11 adjacents sont avantageusement séparés par une distance comprise entre 1,5 et 2,5 mètres, plus avantageusement encore par une distance égale à 2,0 mètres ou de l'ordre de 2,0 mètres.

Le dispositif 1 peut également comporter plusieurs cellules lamellaires de décantation chacune traversée par un ou plusieurs moyen(s) d'accès 11.

La présence de plusieurs moyens d'accès 11 à la zone de stockage 9 des boues 10, directement depuis l'extérieur E du dispositif 1, permet avantageusement, en particulier sur les ouvrages de taille imposante, un pompage desdites boues 10 en plusieurs points du dispositif 1. L'évacuation des boues 10 est ainsi améliorée, et est plus efficace que dans les dispositifs traditionnels de traitement des eaux pluviales.

Le nettoyage de la chambre 9, sous la ou les cellule (s) lamellaire(s) de décantation 8, sera également facilité.

Préférentiellement, ledit au moins un moyen d'accès 11 présente une ouverture traversante à l'intérieur de laquelle est inscrit un cercle ayant un diamètre d compris avantageusement entre 100 et 300 millimètres, de préférence entre 150 et 250 millimètres.

Plus avantageusement encore, ledit diamètre d est compris entre 180 et 220 millimètres, et de manière toute préférentielle, le diamètre d du cercle inscrit dans l'ouverture est égal à 200 millimètres.

Ainsi, avec de telles dimensions, le moyen d'accès 11 est particulièrement adapté pour permettre un passage et un retrait d'un capteur de détection de voile de boues et/ou d'un tuyau de vidange d'hydrocureuse, ledit tuyau présentant, généralement, un diamètre compris entre 80 et 150 millimètres.

En effet, il est préférable que ledit capteur puisse être remplacé ou nettoyé rapidement, ce qui nécessite de pouvoir retirer et remettre celui-ci sans difficultés de passage.

Plus préférentiellement encore, ledit moyen d'accès 11 présente une section ronde de diamètre d compris entre 100 et 300 millimètres, avantageusement entre 150 et 250 millimètres, avantageusement entre 180 et 220 millimètres et encore plus avantageusement égal à 200 millimètres.

Cette géométrie et ces dimensions sont particulièrement intéressantes pour éviter des interférences entre le câble d'une sonde de mesure des boues et le tuyau de vidange de l'hydrocureuse, surtout dans un exemple de réalisation où le dispositif 1 présente des dimensions restreintes et comporte un moyen d'accès 11 unique sous la cellule de décantation 8.

En outre, il a été mis en évidence, par la demanderesse, que les dimensions évoquées ci-dessus permettaient de limiter l'impact de la présence des moyens d'accès 11 sur la surface utile de décantation lamellaire.

En effet, nécessairement, la présence d'un ou de plusieurs moyen(s) d'accès 11 entraine la suppression et/ou l'obstruction d'une partie de la cellule lamellaire de décantation 8, que celle-ci soit une cellule à plaques 80 ou une cellule à nids d'abeilles.

Toutefois, la demanderesse a remarqué que, de manière surprenante, la présence d'un ou de plusieurs moyen(s) d'accès 11, préférentiellement de section ronde, et de diamètre d compris entre 100 et 300 millimètres, n'entraine pas d'altération du rendement de décantation des eaux 2 qui doivent être traitées, en comparaison avec un dispositif traditionnel dans lequel la cellule lamellaire de décantation n'est traversée par aucun moyen d'accès 11.

Selon un mode de réalisation préférentiel, représenté sur les figures jointes, ledit au moins un moyen d'accès 11 s'étend selon une orientation verticale ou sensiblement verticale.

Une telle orientation est particulièrement avantageuse dans la mesure où elle facilite un passage et/ou un déplacement aisé du capteur ou de la sonde de mesure des boues et/ou de la conduite de soutirage des boues 10 reliée à une machine hydrocureuse.

En référence à présent à la figure 2, laquelle représente plus en détails un moyen d'accès 11 traversant, de part en part, la cellule de décantation lamellaire 8, en l'occurrence une cellule à plaques 80, on remarque que, de préférence, ce moyen d'accès 11 comporte un conduit 12, plus particulièrement de forme tubulaire, et s'étendant au moins en partie au travers de ladite cellule lamellaire de décantation 8.

Dans un mode de réalisation avantageux, qui est celui représenté figure 2, ledit conduit 12 de forme tubulaire s'étend au travers de la cellule lamellaire de décantation 8 et en partie au-dessus de la surface (S) de ladite cellule de décantation 8.

Ainsi, on évite que les eaux pluviales et/ou de ruissellement 2 à traiter, chargées de particules de boues en suspension qui doivent être éliminées, ne traversent le moyen d'accès 11, de préférence le conduit 12, sans passer au travers, par exemple, de la cellule à plaques 80.

Dans ce but, il est également envisageable que le moyen d'accès 11, consistant de préférence en un conduit tubulaire 12, comporte un moyen d'obturation 13 amovible, en sorte de pouvoir être retiré pour permettre le passage du capteur de mesure des boues et/ou de la conduite de soutirage de ces dernières.

Le dispositif 1 séparateur-décanteur selon l'invention est particulièrement intéressant. Il permet de répondre à des problématiques se posant dans les dispositifs traditionnels de traitement des eaux, à savoir, d'une part, une mesure fiable du niveau de boues dans le compartiment de séparation et de décantation et, d'autre part, une élimination aisée et efficace du lit de boues.

La réponse à ces problèmes est permise par la présence d'un ou de plusieurs moyen(s) d'accès 11 qui traverse(nt), de part en part, les cellules lamellaire de décantation 8, pour un accès direct, depuis l'extérieur E du dispositif 1, sous ces cellules 8, à la zone ou chambre de stockage 9 des boues 10.

Toutefois, la demanderesse a dû faire face à de nombreux préjugés et à des difficultés pour obtenir le présent dispositif 1. En particulier, le perçage des cellules lamellaire de décantation 8, par exemple à nids d'abeilles ou à plaques, est une opération délicate, qui nécessite notamment le respect d'une certaine angularité ainsi qu'un réalignement des blocs pour réaliser le perçage.

Cette opération délicate de perçage nécessite l'usage d'un gabarit à variation angulaire et d'un trépan, outil de forage rotatif, présentant un diamètre et une hauteur adéquats, ces outils n'étant pas usuellement utilisés dans le domaine du traitement des eaux.

Il est également à noter que l'invention n'est pas limitée aux exemples illustrés et décrits précédemment. En particulier, il a été décrit un dispositif 1 séparateur-décanteur de traitement d'eaux pluviales et/ou d'eaux de ruissellement comportant un compartiment 7 de séparation et de décantation.

Toutefois, il est envisageable que ledit dispositif 1 comporte une pluralité de compartiments.

Ainsi, par exemple, le dispositif 1 séparateur-décanteur selon l'invention peut comporter, en amont du compartiment 7 de séparation et de décantation, un compartiment de dessablage dont la fonction consiste à permettre une élimination des éléments lourds contenus dans l'eau pluviale ou de ruissellement 2 à traiter, et amenée par l'intermédiaire de la canalisation 4 d'alimentation.

## Revendications

1. Dispositif (1) séparateur-décanteur de traitement des eaux pluviales et/ou de ruissellement (2) chargées de particules de boues à éliminer desdites eaux (2), ledit dispositif (1) comprenant une cuve (3) à laquelle est reliée au moins une canalisation d'alimentation (4) par laquelle arrivent lesdites eaux chargées (2) et au moins une canalisation d'évacuation (5) par laquelle est évacuée une eau (6) débarrassée d'au moins une partie desdites particules, ladite cuve (3) comprenant au moins un compartiment de séparation et de décantation (7), lequel renferme au moins une cellule lamellaire de décantation (8) configurée pour permettre le passage desdites particules de boues au travers de ladite au moins une cellule lamellaire de décantation (8), vers une zone de stockage (9) des boues (10), ladite zone de stockage (9) étant située sous ladite au moins une cellule lamellaire de décantation (8), ledit dispositif (1) étant **caractérisé par le fait qu'**il comporte au moins un moyen d'accès (11) à ladite zone de stockage (9) depuis l'extérieur (E) dudit dispositif (1), ledit moyen d'accès (11) traversant, de part en part, ladite au moins une cellule lamellaire de décantation (8), pour une mesure du voile de boues dans ladite zone de stockage (9) et une élimination efficace desdites boues, ledit moyen d'accès (11) présentant une ouverture traversante à l'intérieur de laquelle est inscrit un cercle ayant un diamètre d compris entre 100 et 300 millimètres, apte à permettre un passage et un retrait d'un capteur de détection de voile de boues et/ou d'une conduite de soutirage des boues.

2. Dispositif (1) séparateur-décanteur selon la revendication précédente **caractérisé par le fait que** ledit au moins un moyen d'accès (11) présente une ouverture traversante à l'intérieur de laquelle est inscrit un cercle compris entre 150 et 250 millimètres, de préférence compris entre 180 et 220 millimètres, ledit diamètre d étant plus préférentiellement encore égal à 200 millimètres.

3. Dispositif (1) séparateur-décanteur selon la revendication précédente **caractérisé par le fait que** ledit au moins un moyen d'accès (11) présente une section ronde de diamètre d compris entre 100 et 300 millimètres, de préférence compris entre 150 et 250 millimètres, de préférence compris entre 180 et 220 millimètres, ledit diamètre d étant plus préférentiellement encore égal à 200 millimètres.

4. Dispositif (1) séparateur-décanteur selon l'une quelconque des revendications précédentes **caractérisé par le fait que** ledit au moins un moyen d'accès (11) s'étend selon une orientation sensiblement verticale.

5. Dispositif (1) séparateur-décanteur selon l'une quelconque des revendications précédentes **caractérisé par le fait que** ledit au moins un moyen d'accès (11) comporte un conduit (12) s'étendant au moins en partie au travers de ladite au moins une cellule lamellaire de décantation (8).

6. Dispositif (1) séparateur-décanteur selon la revendication précédente **caractérisé par le fait que** ledit conduit (12) s'étend au moins en partie au-dessus de la surface de ladite au moins une cellule lamellaire de décantation (8).

7. Dispositif (1) séparateur-décanteur selon l'une quelconque des revendications 5 ou 6 **caractérisé par le fait que** ledit au moins un moyen d'accès (11) comporte un moyen d'obturation (13) amovible dudit conduit (12).

8. Dispositif (1) séparateur-décanteur selon l'une quelconque des revendications précédentes **caractérisé par le fait que** ladite au moins une cellule lamellaire de décantation (8) consiste en une cellule à plaques (80).

9. Dispositif (1) séparateur-décanteur selon l'une quelconque des revendications 1 à 7 **caractérisé par le fait que** ladite au moins une cellule lamellaire de décantation (8) consiste en une cellule, ou un ensemble de blocs, à nids d'abeilles.

## Patentansprüche

1. Trenn-Absetz-Vorrichtung (1) zum Aufbereiten von Regen- und/oder Oberflächenwasser (2), das mit aus dem besagten Wasser (2) zu entfernenden Schlammpartikeln beladen ist, wobei die besagte Vorrichtung (1) eine Wanne (3) umfasst, an der mindestens eine Versorgungsleitung (4), über die das beladene Wasser (2) ankommt, und mindestens eine Abflussleitung (5), über die von mindestens einem Teil der Partikel befreites Wasser (6) abgeführt wird, angeschlossen sind, wobei die besagte Wanne (3) mindestens eine Trenn- und Absetzkammer (7) umfasst, die mindestens eine lamellare Absetzzelle (8) enthält, die konfiguriert ist, um den Durchgang der besagten Schlammpartikel durch die besagte mindestens eine lamellare Absetzzelle (8) zu einem Lagerbereich (9) für den Schlamm (10) zu ermöglichen, wobei sich der besagte Lagerbereich (9) unterhalb der besagten mindestens einen lamellaren Absetzzelle (8) befindet, wobei die besagte Vorrichtung (1) **dadurch gekennzeichnet ist, dass** sie mindestens ein Zugangsmittel (11) von der Außenseite (E) der Vorrichtung (1) zu dem Lagerbereich (9) umfasst, wobei das Zugangsmittel (11) für eine Messung der Schlammdecke in dem Lagerbereich (9) und eine wirksame Beseitigung des Schlamms durch die mindestens eine lamellare Absetzzelle (8) hindurch läuft, wobei das besagte Zugangsmittel (11) eine durchgehende Öffnung aufweist, in der ein Kreis eingeschrieben ist, der einen Durchmesser d zwischen 100 und 300 Millimetern hat, die geeignet ist, um einen Durchgang und eine Entfernung eines Sensors zur Erkennung der Schlammdecke und/oder einer Schlammentnahmeleitung zu erlauben.

2. Trenn-Absetz-Vorrichtung nach dem vorhergehenden Anspruch, **dadurch gekennzeichnet, dass** das besagte mindestens eine Zugangsmittel (11) eine durchgehende Öffnung aufweist, in der ein Kreis zwischen 150 und 250 Millimetern, vorzugsweise zwischen 180 und 220 Millimetern, eingeschrieben ist, wobei der besagte Durchmesser d noch bevorzugter gleich 200 Millimeter ist.

3. Trenn-Absetz-Vorrichtung nach dem vorhergehenden Anspruch, **dadurch gekennzeichnet, dass** das besagte mindestens eine Zugangsmittel (11) einen runden Abschnitt mit einem Durchmesser d zwischen 100 und 300 Millimetern, vorzugsweise zwischen 150 und 250 Millimetern, vorzugsweise zwischen 180 und 220 Millimetern, aufweist, wobei der besagte Durchmesser d noch bevorzugter gleich 200 Millimeter ist.

4. Trenn-Absetz-Vorrichtung nach einem der vorstehenden Ansprüche, **dadurch gekennzeichnet, dass** sich das besagte mindestens eine Zugangsmittel (11) in einer im wesentlichen vertikalen Ausrichtung erstreckt.

5. Trenn-Absetz-Vorrichtung nach einem der vorstehenden Ansprüche, **dadurch gekennzeichnet, dass** das besagte mindestens eine Zugangsmittel (11) eine Leitung (12) umfasst, die sich zumindest teilweise durch die besagte mindestens eine lamellare Absetzzelle (8) erstreckt.

6. Trenn-Absetz-Vorrichtung nach dem vorhergehenden Anspruch, **dadurch gekennzeichnet, dass** sich die besagte Leitung (12) zumindest teilweise oberhalb der Oberfläche der besagten mindestens einen lamellaren Absetzzelle (8) erstreckt.

7. Trenn-Absetz-Vorrichtung nach irgendeinem der Ansprüche 5 oder 6, **dadurch gekennzeichnet, dass** das besagte mindestens eine Zugangsmittel (11) ein Verschlussmittel (13) umfasst, das von der besagten Leitung (12) abnehmbar ist.

8. Trenn-Absetz-Vorrichtung nach irgendeinem der vorhergehenden Ansprüche, **dadurch gekennzeichnet, dass** die besagte mindestens eine lamellare Absetzzelle (8) aus einer Plattenzelle (80) besteht.

9. Trenn-Absetz-Vorrichtung nach irgendeinem der Ansprüche 1 bis 7, **dadurch gekennzeichnet, dass** die besagte mindestens eine lamellare Absetzzelle (8) aus einer Zelle, oder einem Satz von Blöcken, mit Waben besteht.

## Claims

1. Separator-decanter device (1) for treating rainwater and/or run-off water (2) loaded with sludge particles to be removed from said water (2), said device (1) comprising a tank (3) to which is connected at least one supply pipe (4) through which said loaded water (2) arrives and at least one discharge pipe (5) through which water (6) is discharged free of at least part of said particles, said tank (3) comprising at least one separating and settling compartment (7), which contains at least one lamellar settling cell (8) configured to permit the passing of said sludge particles through said at least one lamellar settling cell (8), towards a storage area (9) for the sludge (10), said storage area (9) being located under said at least one lamellar settling cell (8), said device (1) being **characterized in that** it includes at least one means for accessing (11) said storage area (9) from the outside (E) of said device (1), said access means (11) passing through said entire at least one lamellar settling cell (8), for a measurement of the sludge blanket in said storage area (9) and an effective elimination of said sludge, said access means (11) having a through opening inside which is inscribed a circle having a diameter d between 100 and 300 millimeters, capable of permitting a passing through and a removal of a sludge blanket detection sensor and/or a sludge removal pipe.

2. Separator-decanter device (1) according to the preceding claim, wherein said at least one access means (11) has a through opening inside which is inscribed a circle between 150 and 250 millimeters, preferably between 180 and 220 millimeters, said diameter d being yet more preferably equal to 200 millimeters.

3. Separator-decanter device (1) according to the preceding claim, wherein said at least one access means (11) has a round cross-section with a diameter d between 100 and 300 millimeters, preferably between 150 and 250 millimeters, preferably between 180 and 220 millimeters, said diameter d being yet more preferably equal to 200 millimeters.

4. Separator-decanter device (1) according to any one of the preceding claims, wherein said at least one access means (11) extends in a substantially vertical orientation.

5. Separator-decanter device (1) according to any one of the preceding claims, wherein said at least one access means (11) includes a pipe (12) extending at least partially through said at least one lamellar settling cell (8).

6. Separator-decanter device (1) according to the preceding claim, wherein said pipe (12) extends at least partially above the surface of said at least one lamellar settling cell (8).

7. Separator-decanter device (1) according to any one of claims 5 or 6, wherein said at least one access means (11) includes a closure means (13) removable from said pipe (12).

8. Separator-decanter device (1) according to any one of the preceding claims, wherein said at least one lamellar settling cell (8) consists of a cell with plates (80).

9. Separator-decanter device (1) according to any one of claims 1 to 7, wherein said at least one lamellar settling cell (8) consists of a cell, or a set of blocks, with honeycombs.
